# EUROPÄISCHE PATENTSCHRIFT

(11) **EP 2 918 754 B1**
(45) Veröffentlichungstag und Bekanntmachung des Hinweises auf die Patenterteilung: **04.05.2016**
(21) Anmeldenummer: 15158587.4
(22) Anmeldetag: 11.03.2015
(51) Int. Cl.: E05B 7/00, F24C 15/02

(54) **GRIFF FÜR EIN GERÄT ODER MÖBEL**
HANDLE FOR A DEVICE OR FURNITURE
POIGNÉE POUR UN APPAREIL OU UN MEUBLE

(30) Priorität: 14.03.2014 DE 102014003663
(43) Veröffentlichungstag der Anmeldung: 16.09.2015
(73) Patentinhaber: Miele & Cie. KG, 33332 Gütersloh (DE); Gronbach Vertriebs GmbH, 83512 Wasserburg am Inn (DE)
(72) Erfinder: Weber, Franz Josef, 83530 Schnaitsee (DE); Geidobler, Konrad, 83569 Vogtareuth (DE); Feldkamp, Ulrich, 83533 Edling (DE)

(56) Entgegenhaltungen:
- EP-A1- 2 317 229
- DE-A1- 19 948 579
- US-A1- 2004 034 964
- US-A1- 2006 119 234

## Beschreibung

Griff für ein Gerät oder ein Möbel mit einer Griffstange und mit einer oder zwei Dreheinheiten Die Erfindung betrifft einen Griff für ein Gerät oder ein Möbel mit einer Griffstange und mit einer oder zwei Dreheinheiten, die jeweils ein Gehäuse und eine Welle aufweisen, wobei die Welle in dem Gehäuse drehbar gelagert ist, und wobei die Griffstange an dem Gehäuse oder den Gehäusen der Dreheinheit oder der Dreheinheiten befestigt ist. Bei dem Gerät kann es sich insbesondere um ein Haushaltsgerät und/oder ein Elektrogerät handeln, beispielsweise einen Elektroherd.

Ein solcher Griff ist beispielsweise aus der EP 2 317 229 A1 bekannt. Aus der US 2006/119234 A1 ist ein Griff für einen Kühlschrank bekannt, bei der das Gehäuse nicht an der Griffstange, sondern an einem Griffbock befestigt ist. In beiden Fällen ist die Griffstange über die Dreheinheit verdrehbar an Griffböcken befestigt und wird durch eine Drehfeder in ihre Ausgangslage zurückbewegt.

Aufgabe der Erfindung ist es, eine verbesserte Dreheinheit der eingangs angegebenen Art vorzuschlagen.

Erfindungsgemäß wird diese Aufgabe durch einen Griff mit den Merkmalen des Anspruchs 1 gelöst. Die Dreheinheit umfasst ein Gehäuse, eine Welle und einen Schieber. Das Gehäuse ist vorzugsweise aus Kunststoff hergestellt. Die Welle ist in dem Gehäuse dreh-bar gelagert. Sie ist vorzugsweise aus Metall, insbesondere aus Stahl, hergestellt.

Der Schieber ist in dem Gehäuse längsverschieblich und drehfest gelagert. Er ist durch eine Feder, vorzugsweise eine Druckfeder, belastet. Ferner weist der Schieber eine Führungskulisse auf, in die in Führungsstift oder ein sonstiges Führungs-element der Welle eingreift.

Vorteilhaft ist es, wenn in dem Schieber und/oder in dem Gehäuse einer oder mehrere Kanäle für ein Dämpfungsfluid vorgesehen sind. Der oder die Kanäle können an der Außenseite des Schiebers vorgesehen sein. Stattdessen oder zusätzlich können Sie allerdings auch innerhalb des Schiebers verlaufen. Ferner können die Kanäle stattdessen oder zusätzlich an der Innenseite des Gehäuses verlaufen. Der Innenraum des Gehäuses wird durch den Schieber in zwei Kammern geteilt. Bei einer axialen Bewegung des Schiebers durchströmt das Dämpfungsfluid den oder die Kanäle, wodurch dessen Bewegung gedämpft wird. Das Dämpfungsfluid kann flüssig oder pastös sein. Es kann insbesondere als Fettfüllung ausgebildet sein.

Die Dreheinheit bildet eine Komponente für Griffe, die durch eine Drehbewegung eine rückstellende Federkraft erzeugt. Nach dem Ausführen einer Drehbewegung wird die Dreheinheit durch die Federkraft wieder in die Ausgangslage zurückgedreht. Dabei kann die Drehbewegung gleichzeitig gedämpft werden. Die Dreheinheit wird dann nach einer Verdrehung gedämpft in die Ausgangslage zurückgedreht.

Vorteilhafte Weiterbildungen der Erfindung sind in den Unteransprüchen beschrieben.

Die Welle kann in dem Gehäuse und/oder in einem mit dem Gehäuse verbundenen Deckel drehbar gelagert sein. Stattdessen oder zusätzlich kann die Welle in dem Schieber drehbar gelagert sein.

Vorteilhaft ist es, wenn die Führungskulisse eine Mittelstellung und/oder eine oder zwei Endstellungen aufweist. Die Führungskulisse ist vorzugsweise V-förmig aus-gebildet. Die Mitte der Führungskulisse bildet dann die Mittelstellung, und die bei-den Enden der Führungskulisse bilden zwei Endstellungen.

Nach einer weiteren vorteilhaften Weiterbildung weist das Gehäuse an seiner Außenseite einen oder mehrere Vorsprünge auf. Stattdessen oder zusätzlich kann das Gehäuse an seiner Außenseite einen oder mehrere Nuten aufweisen. Vorzugsweise sind zwei Vorsprünge und/oder zwei Nuten vorhanden. Die Vorsprünge und/oder Nuten liegen einander vorzugsweise gegenüber.

Eine weitere vorteilhafte Weiterbildung ist dadurch gekennzeichnet, dass der Deckel einen oder mehrere Vorsprünge aufweist. Die Vorsprünge liegen vorzugsweise einander gegenüber.

Vor-teilhaft ist es, wenn der Griff zwei erfindungsgemäße Dreheinheiten umfasst. Es ist allerdings auch möglich, lediglich eine erfindungsgemäße Dreheinheit vorzusehen und die Griffstange an ihrem anderen Ende in einer üblichen Lagerung zu lagern.

Eine vorteilhafte Weiterbildung ist dadurch gekennzeichnet, dass die Griffstange ein Profil aufweist, das dem oder den Vorsprüngen und/oder der oder den Nuten des Gehäuses entspricht. Stattdessen oder zusätzlich weist die Griffstange vorzugsweise ein Profil auf, das dem oder den Vorsprüngen des Deckels entspricht. Auf diese Weise kann eine drehfeste Verbindung zwischen der Griffstange einerseits und dem Gehäuse und/oder dem Deckel andererseits geschaffen werden.

Die Welle der Dreheinheit oder der Dreheinheiten kann an jeweils einem Griffbock befestigt sein. Der Griffbock kann an dem Gerät oder dem Möbel befestigbar oder befestigt sein.

Ein Ausführungsbeispiel der in den Patentansprüchen definierten Erfindung wird nachstehend anhand der beigefügten Zeichnung im Einzelnen erläutert. In der Zeichnung zeigt:
- Figur 1: eine Dreheinheit in einer perspektivischen Explosivdarstellung
- Figur 2: die Dreheinheit gemäß Fig. 1 im montierten Zustand
- Figur 3: die Dreheinheit gemäß Fig. 1 und 2 ohne Gehäuse in der Mittelstellung
- Figur 4: die Dreheinheit in einer der Fig. 3 entsprechenden Darstellung nach einer teilweisen Verdrehung
- Figur 5: die Dreheinheit in einer der Fig. 3 und 4 entsprechenden Darstellung in einer Endstellung
- Figur 6: den Schieber der Dreheinheit in einer vergrößerten perspektivischen Darstellung
- Figur 7: einen Längsschnitt durch die Dreheinheit in der Mittelstellung

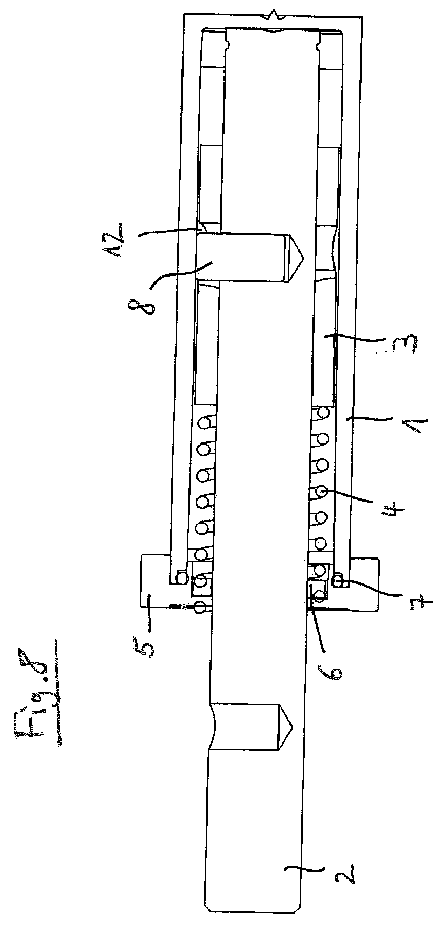

- Figur 8: einen Längsschnitt durch die Dreheinheit in einer Endstellung
- Figur 9: einen Teil eines Griffs mit einer Griffstange, einer Dreheinheit und einem Griffbock
- Figur 10: den Griff gemäß Fig. 9 im montierten Zustand in der Mittelstellung
- Figur 11: den Griff mit einer teilweise ausgelenkten Griffstange
- Figur 12: den Griff mit einer fast vollständig ausgelenkten Griffstange
- Figur 13: den Griff mit einer vollständig ausgelenkten Griffstange
- Figur 14: eine Dreheinheit und einen Teil einer Griffstange im nicht montier-ten Zustand in einer perspektivischen Darstellung
- Figur 15: die Dreheinheit und die Griffstange gemäß Fig. 14 in einem teilwei-se montierten Zustand
- Figur 16: eine abgewandelte Ausführungsform einer Dreheinheit und einer Griffstange im nicht montierten Zustand in einer perspektivischen Darstellung
- Figur 17: die Dreheinheit und die Griffstange gemäß Fig. 16 im teilweise montierten Zustand
- Figur 18: den Gegenstand der Fig. 17 in einer Ansicht von hinten und

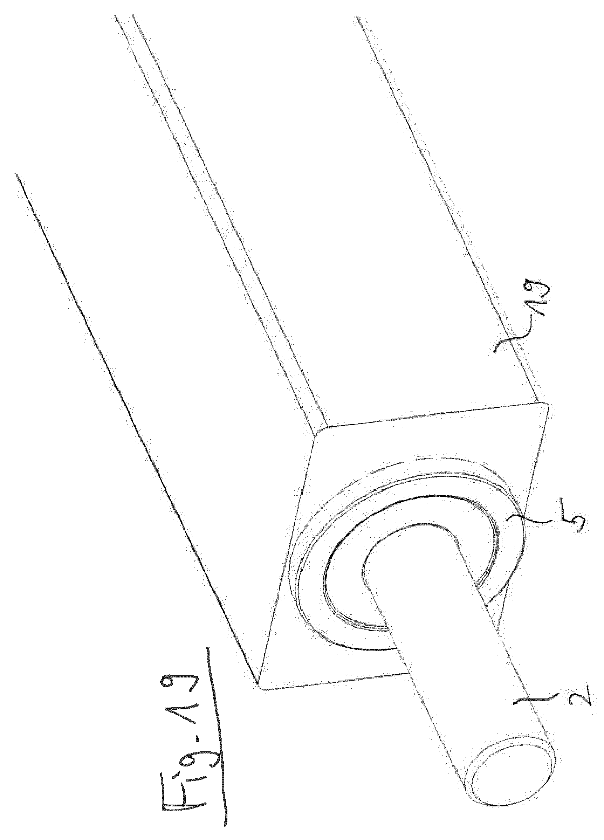

- Figur 19: den Gegenstand der Fig. 14 bis 18 im vollständig montierten Zustand.

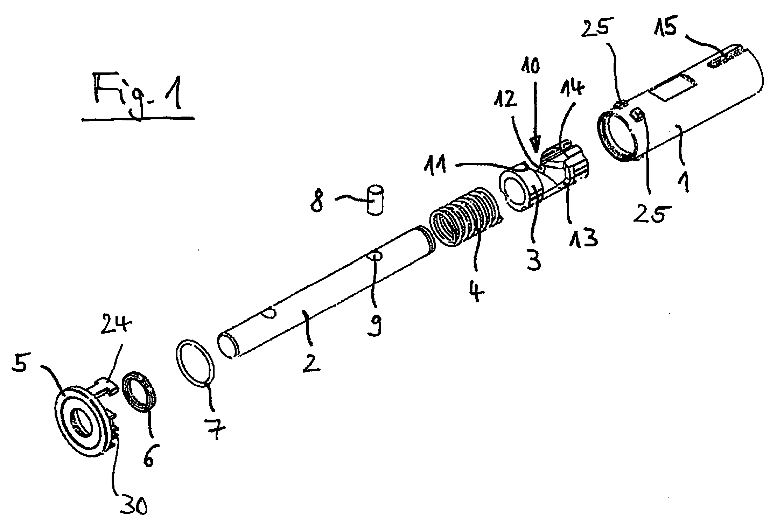

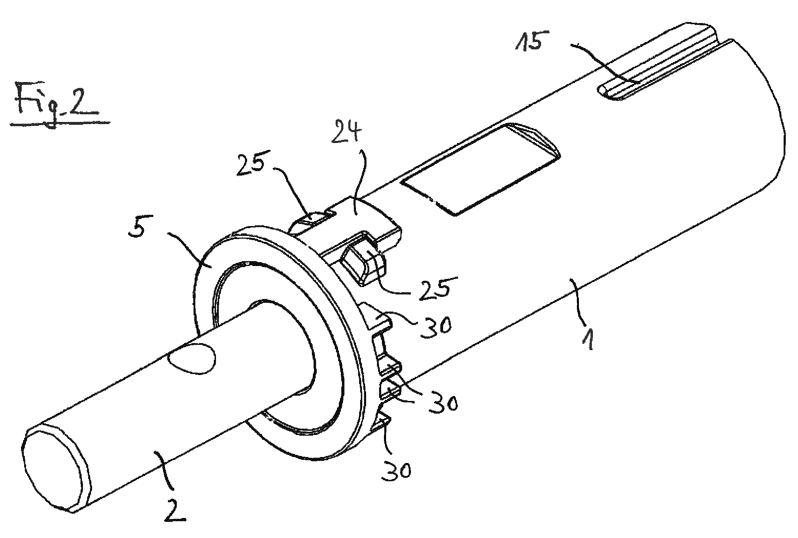

Die in Fig. 1 und 2 gezeigte Dreheinheit umfasst ein Gehäuse 1, eine Welle 2, einen Schieber 3, eine Feder 4 und einen Deckel 5. Die Welle 2 ist in dem Deckel 5 und in dem Schieber 3 drehbar gelagert. Der Schieber 3 ist im Wesentlichen zylinderförmig. Er ist in dem Gehäuse 1 längsverschieblich und drehfest gelagert. Er ist ferner durch die Feder 4 belastet. Die Feder 4 ist als Druckfeder ausgebildet. Sie ist ferner als Spiralfeder ausgebildet. Die Feder 4 umschließt die Welle 2. Sie stützt sich an ihrem einen Ende an der Innenseite des Deckels 5 und an ihrem anderen Ende an einer Stirnfläche des Schiebers 3 ab. Der Deckel 5 ist an dem Gehäuse 1 befestigt. Er ist durch Dichtungsringe 6, 7 abgedichtet.

An der Welle 2 ist ein Führungsstift 8 befestigt. Er ist in eine entsprechende Bohrung 9 der Welle 2 eingesteckt. Der Führungsstift 8 kann durch eine Presspassung mit der Bohrung 9 verbunden sein. Stattdessen oder zusätzlich kann er mit der Bohrung 9 der Welle 2 verklebt und/oder verschraubt sein. Der Führungsstift 8 verläuft senkrecht zur Längsrichtung der Welle 2. Er ragt über den Außenumfang der Welle 2 hinaus.

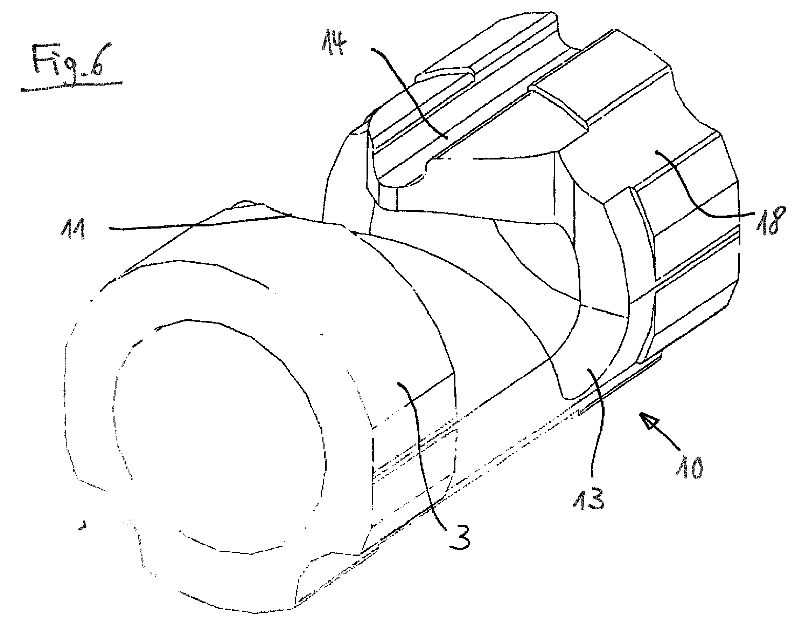

In dem Schieber 3 ist eine Führungskulisse 10 vorgesehen. Wie insbesondere aus Fig. 1 und 6 ersichtlich befindet sich die Führungskulisse 10 im Außenumfang des Schiebers 3. Sie ist V-förmig ausgebildet. Die Führungskulisse 10 weist eine Mittelstellung 11, eine erste Endstellung 12 und eine zweite Endstellung 13 auf. Die Mittelstellung 11 befindet sich in der Mitte der V-förmigen Führungskulisse 10. Die Endstellungen 12, 13 befinden sich an den Enden der V-förmigen Führungskulisse 10.

In dem Schieber 3 ist eine Führungsnut 14 vorgesehen. Die Führungsnut 14 ist im Außenumfang des Schiebers 3 ausgebildet. Sie verläuft in Längsrichtung des Schiebers 3. Die Führungsnut 14 beginnt an der Mittelstellung 11 der V-förmigen Führungskulisse 10. Sie verläuft bis zum Ende des Schiebers 3. In dem Gehäuse 1 ist ein entsprechender Führungsvorsprung 15 vorgesehen. Der Führungsvorsprung 15 befindet sich an dem dem Deckel 5 abgewandten Ende des Gehäuses 1. Erweist nach innen. Der Führungsvorsprung 15 verläuft geradlinig. Sein Querschnitt entspricht im Wesentlichen dem Querschnitt der Führungsnut 14. Der Führungs-vorsprung 15 greift in die Führungsnut 14 ein. Durch das Zusammenwirken von Führungsnut 14 und Führungsvorsprung 15 ist gewährleistet, dass der Schieber 3 in dem Gehäuse 1 längsverschieblich und drehfest gelagert ist.

In dem Schieber 3 ist eine weitere Führungsnut 16 vorgesehen, die gegenüber der Führungsnut 14 um 180° versetzt ist. Die weitere Führungsnut 16 ist im Übrigen genauso ausgebildet wie die Führungsnut 14. In entsprechender Weise ist in dem Gehäuse 1 ein weiterer Führungsvorsprung 17 vorgesehen, der gegenüber dem Führungsvorsprung 15 um 180° versetzt ist und der im Übrigen wie der Führungs-vorsprung 15 ausgebildet ist.

In dem Schieber 3 sind Kanäle 18 für ein Dämpfungsfluid vorgesehen. Die Kanäle 18 sind in die Außenseite des Schiebers 3 eingearbeitet. Sie verlaufen in Längs-richtung des Schiebers 3.

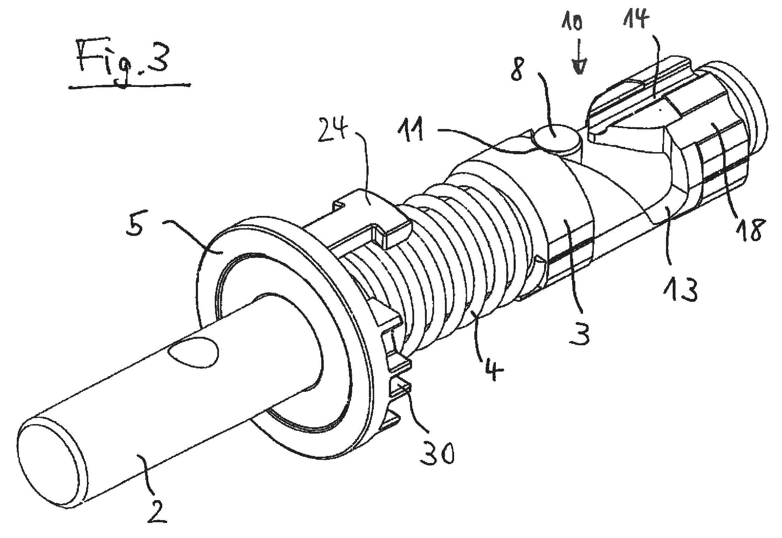

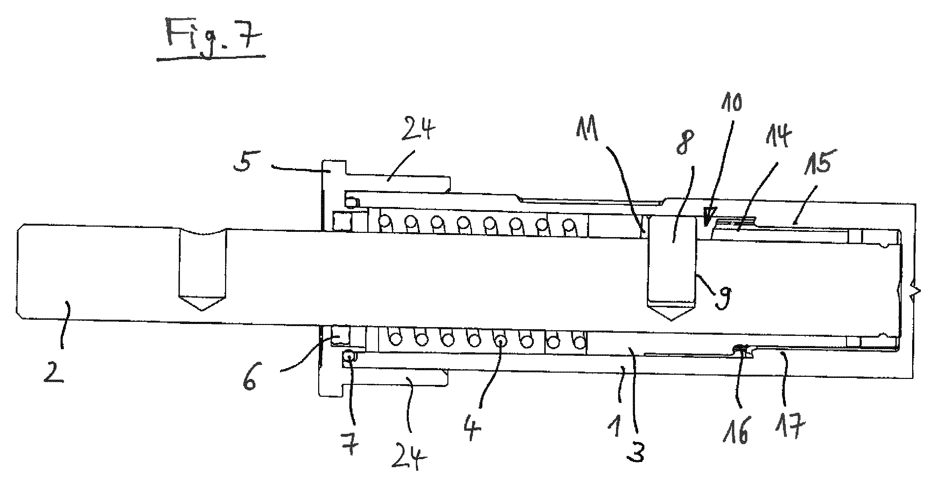

Im Betrieb befindet sich die Dreheinheit zunächst in der Stellung, die in Fig. 3, 7 und 10 gezeigt ist. Hier liegt der Führungsstift 8 der Welle 2 an der Mittelstellung 11 der Führungskulisse 10 an. Die Mittelstellung 11 befindet sich in dem Scheitelpunkt der V-förmigen Führungskulisse 10. Die als Druckfeder ausgebildete Feder 4 drückt den Schieber 3 zu dem Führungsstift 8 hin, sodass der Führungsstift 8 zuverlässig an der Mittelstellung der Führungskulisse 10 anliegt.

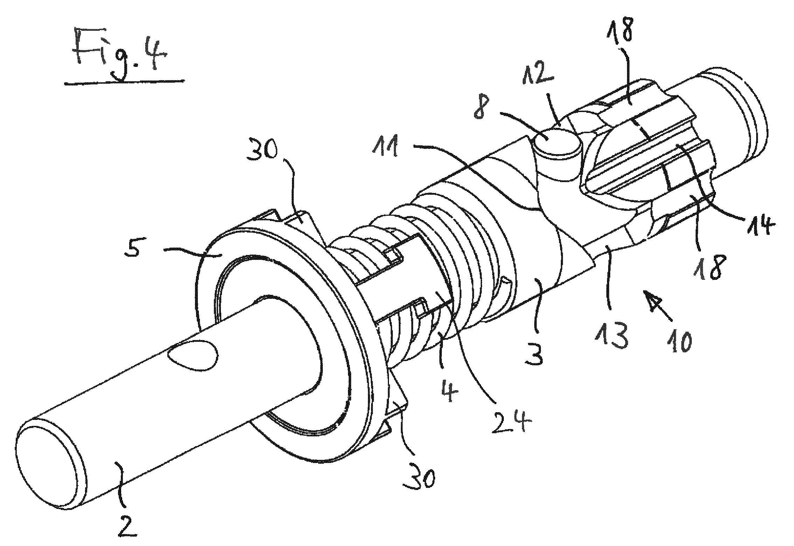

Wenn das Gehäuse 1 gegenüber der Welle 2 verdreht wird, wird die in Fig. 4 gezeigte Stellung erreicht. Das Gehäuse 1 nimmt bei dieser Drehung den Schieber 3 mit, der durch die Verbindungen der Führungsvorsprünge 15, 17 und der Führungsnuten 14, 16 mit dem Gehäuse 1 mitgedreht wird. Dabei läuft der Stift 8 an einer Flanke der V-förmigen Führungskulisse 10 des Schiebers 3 entlang. Da diese Flanke gegenüber der Längsrichtung der Welle 2 und des Schiebers 3 geneigt ist, wird der Schieber 3 zum Deckel 5 des Gehäuses 1 hin bewegt. Der Abstand zwischen dem Schieber 3 und dem Deckel 5 wird verkleinert, sodass die Feder 4 zusammengedrückt wird.

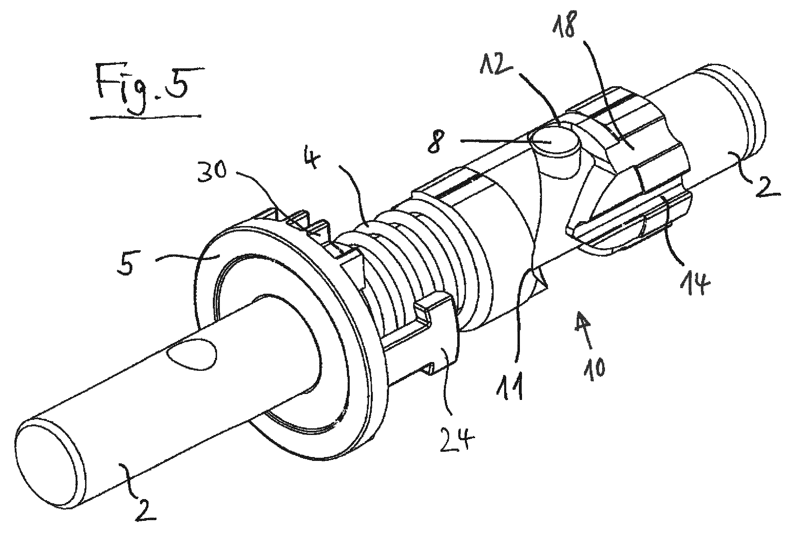

Wenn das Gehäuse 1 gegenüber der Welle 2 weiter verdreht wird, wird die in Fig. 5 gezeigte Endstellung erreicht. Hier liegt der Führungsstift 8 an der ersten Endstellung 12 der V-förmigen Führungskulisse 10 an. Die erste Endstellung 12 wird von dem Ende des zugehörigen Schenkels der V-förmigen Führungskulisse 10 gebildet. Die Feder 4 ist maximal zusammengedrückt.

Wenn anschließend das Gehäuse 1 losgelassen wird, übt die als Druckfeder aus-gebildete Feder 4 eine Kraft auf den Schieber 3 aus, die von dem Deckel 5 des Gehäuses 1 weggerichtet ist. Da der Schenkel der V-förmigen Führungskulisse 10 gegenüber der Längsrichtung des Schiebers 3 geneigt verläuft, wird dadurch der Schieber 3 gegenüber der Welle 2 verdreht. Über die Führungsnuten 14, 16 und die Führungsvorsprünge 15, 17 wird das Gehäuse 1 in demselben Ausmaß verdreht wie der Schieber 3. Im Endergebnis wird durch die Kraft der Feder 4 der Schieber 3 und mit ihm das Gehäuse 1 zurückgedreht. Der Schieber 3 durchläuft mit dem Gehäuse 1 die ursprüngliche Auslenkbewegung in umgekehrter Richtung. Über die Zwischenstellung gemäß Fig. 4 wird die nicht ausgelenkte Anfangsstellung gemäß Fig. 3 erreicht, in der der Führungsstift 8 in der Mittelstellung 11 der V-förmigen Führungskulisse 10 liegt.

Dabei wird die Bewegung des Schiebers 3 gedämpft. Der Schieber 3 teilt den In-nenraum des Gehäuses 1 in zwei Kammern. Die erste Kammer wird von dem Ringbereich gebildet, der sich zwischen der Welle 2 und dem Gehäuse 1 befindet und in dem die Feder 4 liegt. Die zweite Kammer wird von dem Innenbereich des Gehäuses 1 gebildet, der auf der gegenüberliegenden Seite des Schiebers 3 liegt. In beiden Kammern ist eine Fettfüllung vorhanden. Wenn sich der Schieber 3 durch die Wirkung des Führungsstifts 8 längs der Führungskulisse 10 in axialer Richtung bewegt, wird das Volumen einer Kammer vermindert und das Volumen der anderen Kammer vergrößert. Zum Ausgleich strömt die Fettfüllung durch die Kanäle 18, wodurch die Bewegung des Schiebers 3 und mit ihm des Gehäuses 1 gedämpft wird.

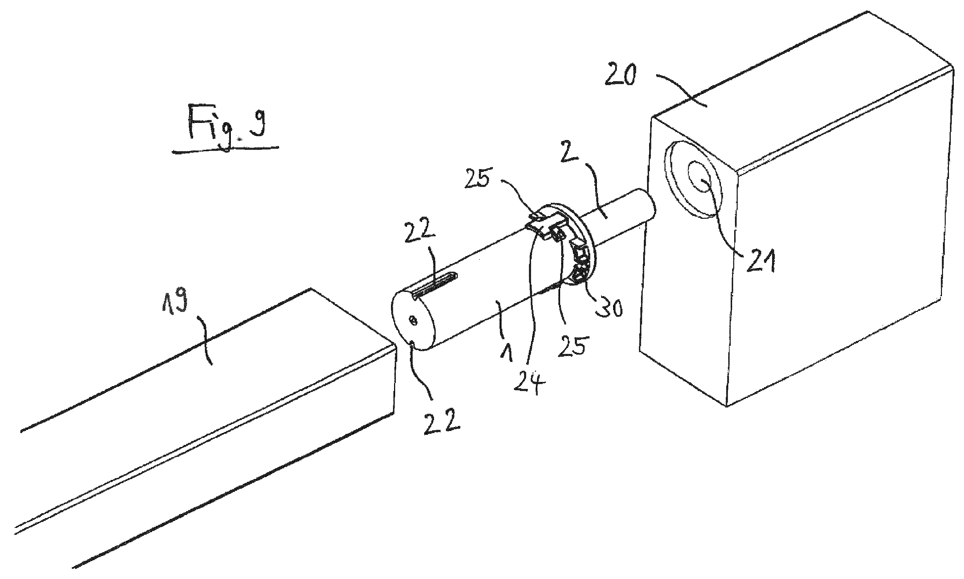

Der in Fig. 9-13 gezeigte Griff für ein Gerät umfasst zwei Dreheinheiten, eine Griffstange 19 und zwei Griffböcke 20. Die Griffböcke 20 können an dem Gerät befestigt sein, insbesondere an einer Herdklappe. Sie können mit dem Gerät verschraubt und/oder verklebt sein.

In jedem Griffbock 20 ist eine Öffnung 21 vorhanden, in die die Welle 2 einer Dreheinheit eingepasst sein kann. Die Welle 2 ist mit dem Griffbock 20 fest verbunden, und zwar sowohl in axialer Richtung wie auch in Drehrichtung. Die Öffnungen 21 der Griffböcke 20 liegen einander gegenüber. Sie fluchten miteinander.

Die Griffstange 19 ist an jedem Ende mit einem Gehäuse 1 einer Dreheinheit verbunden. Zur Übertragung der Drehbewegung der Griffstange 19 auf die Gehäuse 1 der Dreheinheiten sind an jedem Gehäuse 1 zwei Führungsnuten 22 ausgebildet. Die Führungsnuten 22 befinden sich an den den Wellen 2 und den Deckeln 5 ab-gewandten Enden der Gehäuse 1. Sie sind um jeweils 180° gegeneinander versetzt. Die Führungsnuten 22 werden von den Außenseiten der Führungsvorsprünge 15, 17 gebildet. Sie verlaufen in Längsrichtung der Gehäuse 1. Dabei beginnen sie an dem jeweiligen Ende des Gehäuses 1, das dem Deckel 5 gegenüber liegt. In der Griffstange 19 sind entsprechende Führungsvorsprünge vorhanden (in der Zeichnung nicht dargestellt), die in die Führungsnuten 22 eingreifen.

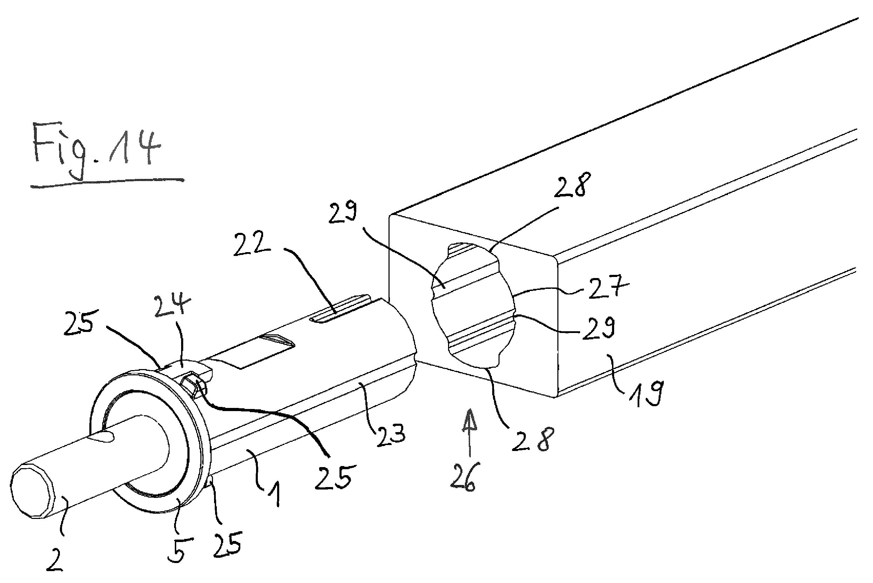

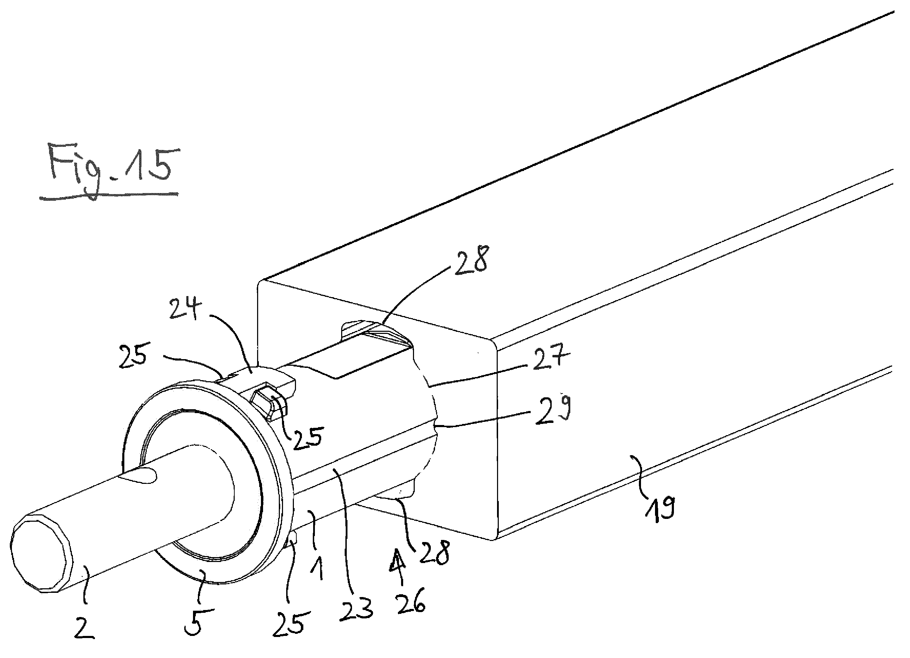

Fig. 14 und 15 zeigen eine abgewandelte Ausführungsform der Dreheinheit. Hier weist das Gehäuse 1 zwei Nuten 23 auf. Die Nuten 23 sind als Vertiefungen aus-gebildet. Sie verlaufen in Längsrichtung des Gehäuses 1. Die Nuten 23 sind in die äußere Mantelfläche des Gehäuses 1 eingearbeitet. Sie liegen einander gegen-über. In Fig. 14 und 15 ist jeweils nur eine der Nuten 23 zu sehen.

Wie in den anderen Ausführungsformen weist der Deckel 5 einen T-förmigen Vor-sprung 24 auf. Er verläuft vom Rand des Deckels 5 zu dem Gehäuse 1 hin. Der T-förmige Vorsprung 24 verläuft parallel zur Mantelfläche des Gehäuses 1. Er liegt an der Mantelfläche des Gehäuses 1 an. Der T-förmige Vorsprung 24 ist in derselben Weise gekrümmt wie die äußere Mantelfläche des Gehäuses 1.

Das Gehäuse 1 weist zwei Vorsprünge 25 auf. Die Vorsprünge 25 weisen von der äußeren Mantelfläche des Gehäuses 1 nach außen. Sie befinden sich an dem dem Deckel 5 zugewandten Ende des Gehäuses 1. In der zusammengesetzten Stellung liegen die Vorsprünge 25 zwischen dem Deckel 5 und dem T-förmigen Vorsprung 24, von dem sie eingefasst werden.

Die Griffstange 19 weist ein Profil 26 auf. Das Profil 26 wird durch eine Öffnung in der Griffstange 19 gebildet. Es befindet sich an dem dem Gehäuse 1 zugewandten Ende der Griffstange 19. Das Profil 26 weist mindestens eine Tiefe auf, die der Länge des Gehäuses 1 entspricht. Es kann allerdings auch als durchgehendes Profil ausgebildet sein.

Die Kontur 27 des Profils 26 ist derart ausgebildet, dass sie eine drehfeste Verbindung des Gehäuses 1 mit der Griffstange 19 ermöglicht. Hierzu weist die Kontur 27 eine Ausbuchtung 28 auf, die den T-förmigen Vorsprung 24 und die Vorsprünge 25 aufnimmt. Ferner weist die Kontur 27 zwei Stege 29 auf, die nach innen gerichtet sind und deren Form der Nut 23 entspricht. Im montierten Zustand liegen die Nuten 23 im Bereich der Stege 29.

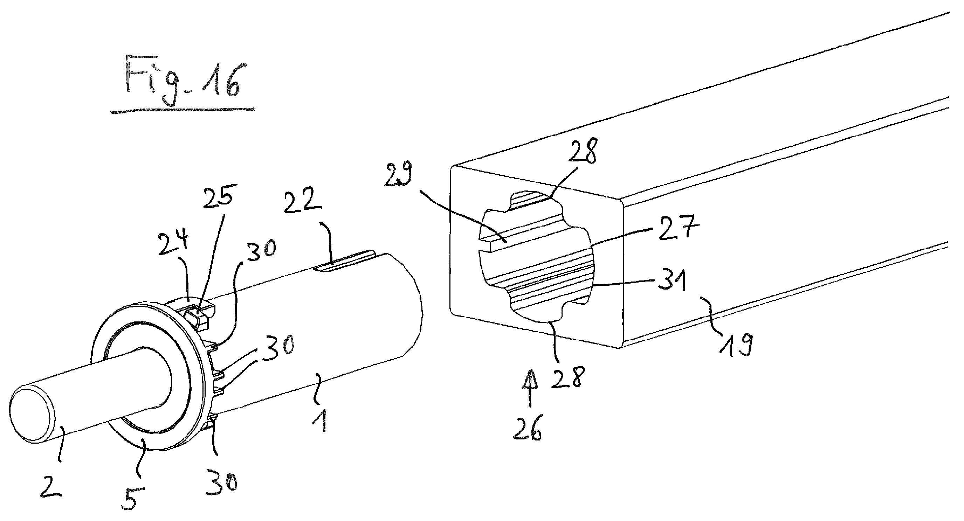

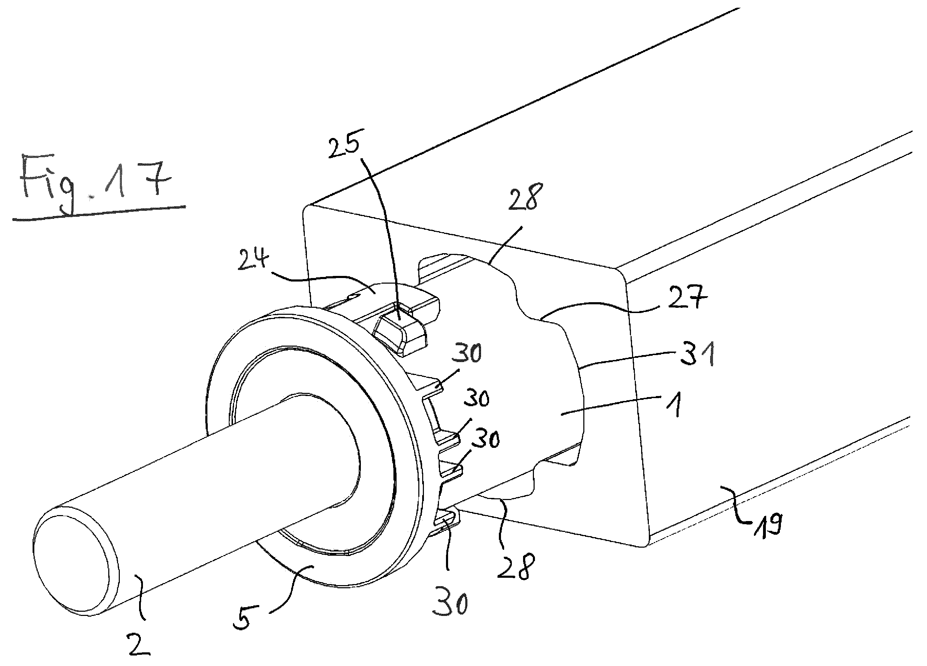

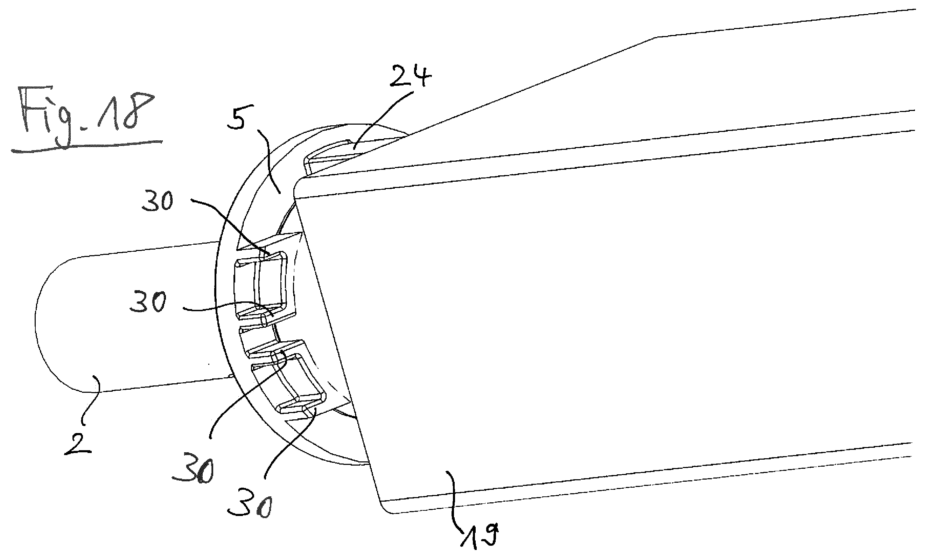

Bei der Ausführungsform nach Fig. 16 und 17 sind entsprechende Teile mit denselben Bezugszeichen versehen, so dass sie nicht erneut beschrieben werden müssen. Hier weist der Deckel 5 Vorsprünge 30 auf. Auf der gegenüberliegenden Seite des Deckels 50 sind weitere Vorsprünge vorhanden (in den Darstellungen der Fig. 17 und 18 nicht sichtbar). Die Kontur 27 des Profils 26 der Griffstange 19 weist Ausbuchtungen 31 auf, deren Form den Vorsprüngen 30 entspricht. Im montierten Zustand liegen die Vorsprünge 30 innerhalb der Ausbuchtungen 31.

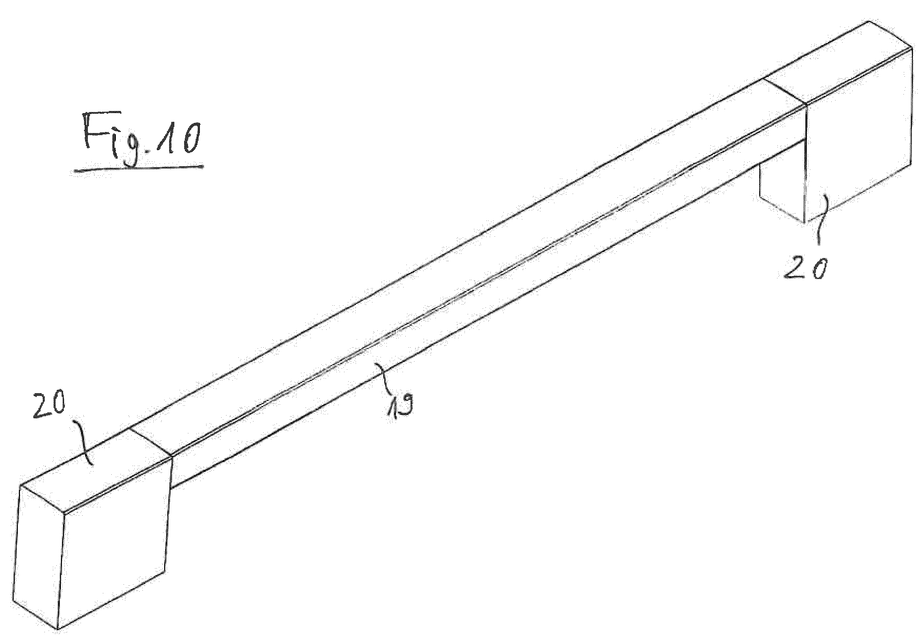

Im Betrieb nimmt die Griffstange 19 zunächst die in Fig. 10 gezeigte Mittelstellung ein, in der der Schieber 3 und mit ihm das Gehäuse 1 nicht ausgelenkt sind. In dieser Stellung liegt der Führungsstift 8 an der Mittelstellung 11 der Führungskulisse 10 des Schiebers 3 an.

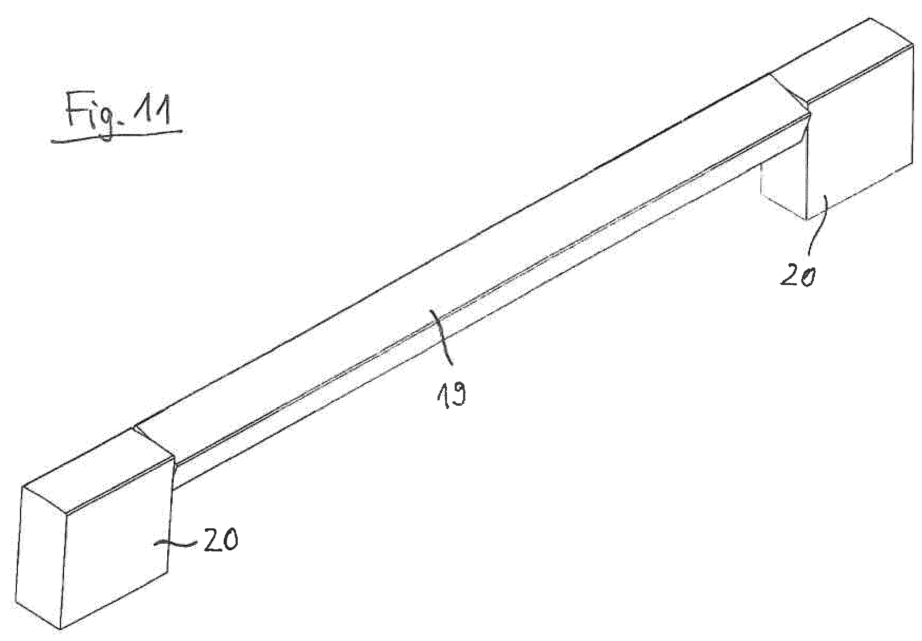

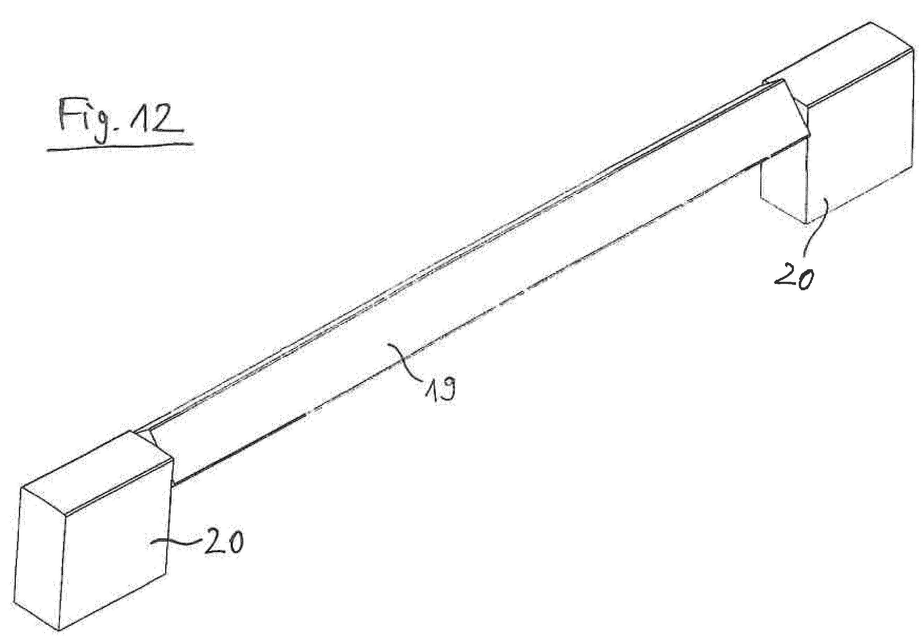

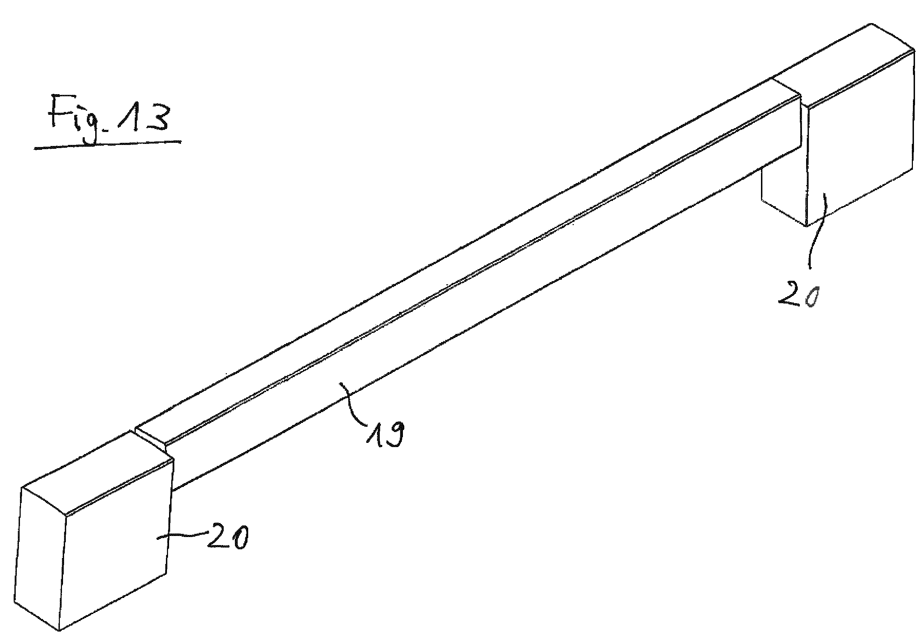

Wenn die Griffstange 19 verdreht wird, nimmt sie nacheinander die Stellungen gemäß Fig. 11 und Fig. 12 ein, bis die in Fig. 13 gezeigte, vollständig ausgelenkte Stellung erreicht ist. Hier liegt der Führungsstift 8 an der ersten Endstellung 12 der Führungskulisse 10 an.

Wenn anschließend die Griffstange 19 losgelassen wird, durchläuft sie selbsttätig die erwähnten Stellungen in umgekehrter Reihenfolge. Sie wird also zunächst in die in Fig. 12 gezeigte, fast vollständig ausgelenkte Stellung zurückgeschwenkt, an-schließend in die in Fig. 11 gezeigte, teilweise ausgelenkte Stellung und anschließend in die in Fig. 10 gezeigte Grundstellung. Dies erfolgt durch die Kraft der als Druckfeder ausgebildeten Feder 4, die auf den Schieber 3 wirkt und diesen Schieber 3 und mit in das Gehäuse 1 und die Griffstange 19 zurückdreht.

Die Drehbewegung der Griffstange 19 ist in beiden Richtungen gedämpft. Die Dämpfung wird durch die Fettfüllung in dem Gehäuse 1 erzeugt, die bei der Bewegung des Schiebers 3 dessen Kanäle 18 durchströmt.

Durch die Erfindung wird eine Komponente geschaffen, die für Bedienelemente wie Griffe oder ähnliche bewegliche Bauteile verwendet werden kann. Diese Komponente kann sowohl per Federkraft eine Drehbewegung erzeugen wie auch diese Drehbewegung gleichzeitig dämpfen. Die Erfindung kann bei einem Griff verwendet werden, dessen Griffstange verdreht werden kann. Die Griffstange 19 kann in zwei Richtungen um jeweils etwa 90° verdreht werden. Sie kann dann selbsttätig und gedämpft in die Ausgangslage zurückkehren.

Wie in dem Ausführungsbeispiel gezeigt wird die Kraft der Feder 4 über die Führungskulisse 10 in dem Schieber 3 und einen in die Welle 2 eingesetzten Führungsstift 8 in eine Drehbewegung umgesetzt. Dabei definiert die Kontur der Führungskulisse 10 den Verlauf des Drehmoments über die Drehbewegung. Gleichzeitig können durch die Kulisse 10 eine definierte Mittelstellung 11 und Endstellungen 12, 13 definiert werden. Der Schieber 3 läuft in einem Gehäuse 1 mit Fettfüllung und teilt dieses in zwei Kammern. Bewegt sich der Schieber 3, wird das Fett durch Kanäle 18 im Schieber 3, gegebenenfalls auch im Gehäuse, von einer Kammer in die andere Kammer gedrückt. Dadurch wird die Bewegung gedämpft. Die Fettfüllung dient gleichzeitig der Schmierung und der Dämpfung.

Der Schieber 3 ist in dem Gehäuse 1 geführt. Er kann sich nur in axialer Richtung bewegen. Die Bearbeitung der Welle 2 umfasst eine Bohrung 9 für den Führungs-stift 8 sowie eine Bohrung, Befräsung oder ähnliches, um die Welle an einem Gegenstück, beispielsweise an dem Griffbock 20, zu fixieren.

Es ist möglich, die Feder 4, den Schieber 3, das Gehäuse 1 und den Deckel 5 zu einer kompletten Dreheinheit zu montieren, die wiederum in einer anderen Bau-gruppe, zum Beispiel einem Griff, verbaut werden kann. Die Abstimmung des Drehmoments erfolgt über die Härte und/oder Vorspannung der Feder 4, die insbesondere als Druckfeder ausgebildet ist, sowie über die Geometrie der Führungskulisse 10. Die Abstimmung der Dämpfung erfolgt über die Viskosität und Menge des Fetts oder sonstigen Dämpfungsfluids sowie über die Geometrie der Kanäle 18.

Bei dem Griff gemäß Fig. 9-13 können die Dreheinheiten vormontiert und bei der Endmontage des Griffs in die Griffböcke 20 und die Griffstange 19 eingesetzt wer-den. Sie können im Reparaturfall ebenfalls als Einheit gewechselt werden. Durch eine stabile Einheit aus Stahlwelle 2 und Kunststoffgehäuse 1 können höhe Kräfte von der Griffstange 19 auf die Griffböcke 20 und damit auf die Gerätefront oder Möbelfront übertragen werden. Der Griff kann alternativ auch mit nur einer Dreheinheit ausgestattet werden. Die Verbindung zum zweiten Griffbock 20 kann dann als einfache Lagerung ausgeführt werden.

## Patentansprüche

1. Griff für ein Gerät oder ein Möbel mit einer beweglichen Griffstange (19) und mit einer oder zwei Dreheinheiten, die jeweils ein Gehäuse (1) und eine Welle (2) aufweisen, wobei die Welle (2) in dem Gehäuse (1) drehbar gelagert ist, und wobei die Griffstange (19) an dem Gehäuse (1) oder den Gehäusen (1) der Dreheinheit oder der Dreheinheiten befestigt ist, **gekennzeichnet durch** einen Schieber (3), der in dem Gehäuse (1) in Längsrichtung der Welle (2) verschieblich und drehfest gelagert ist, der **durch** eine Feder (4) belastet ist und der eine Führungskulisse (10) aufweist, in die ein Führungsstift (8) der Welle (2) eingreift.

2. Griff mit mindestens einer Dreheinheit nach Anspruch 1, **dadurch gekennzeichnet, dass** in dem Schieber (3) und/oder in dem Gehäuse (1) einer oder mehrere Kanäle (18) für ein Dämpfungsfluid vorgesehen sind.

3. Griff mit mindestens einer Dreheinheit nach Anspruch 1 oder 2, **dadurch gekennzeichnet, dass** die Welle (2) in einem mit dem Gehäuse (1) verbundenen Deckel (5) und/oder in dem Schieber (3) drehbar gelagert ist.

4. Griff mit mindestens einer Dreheinheit nach einem der vorhergehenden Ansprüche, **dadurch gekennzeichnet, dass** die Führungskulisse (10) eine Mittelstellung (11) und/oder eine oder zwei Endstellungen (12, 13) aufweist.

5. Griff mit mindestens einer Dreheinheit nach einem der vorhergehenden Ansprüche, **dadurch gekennzeichnet, dass** das Gehäuse (1) an seiner Außenseite einen oder mehrere Vorsprünge (25) und/oder eine oder mehrere Nuten (23) aufweist.

6. Griff mit mindestens einer Dreheinheit nach einem der vorhergehenden Ansprüche, **dadurch gekennzeichnet, dass** der Deckel (5) einen oder mehrere Vorsprünge (24, 30) aufweist.

7. Griff mit mindestens einer Dreheinheit nach einem der vorhergehenden Ansprüche, **dadurch gekennzeichnet, dass** die Griffstange (19) ein Profil (26) aufweist, das dem oder den Vorsprüngen (25) und/oder der oder den Nuten (23) des Gehäuses (1) und/oder dem oder den Vorsprüngen (24, 30) des Deckels (5) entspricht.

8. Griff mit mindestens einer Dreheinheit nach einem der vorhergehenden Ansprüche, **dadurch gekennzeichnet, dass** die Welle (2) der Dreheinheit oder der Dreheinheiten an jeweils einem Griffblock (20) befestigt ist.

## Claims

1. A handle for an appliance or furniture with a movable handle bar (19) and with one or two rotational devices, comprising a housing (1) and a shaft (2) rotatably supported in the housing (1), the handle bar (19) being attached to the housing (1) or housings (1) of the rotational device or devices,
**characterized by** a slide (3) movably and non-rotatably supported in the housing (1), said slide being loaded by a spring (4) and having a guide slot (10) in which engages a guide pin (8) of the shaft (2).

2. A handle with at least one rotational device as recited in claim 1, wherein one or more channels (18) for a damping fluid are provided in the slide (3) and/or in the housing (1).

3. A handle with at least one rotational device as recited in claim 1 or 2, wherein the shaft (2) is rotatably supported in a cap (5) connected to the housing (1) and/or in the slide (3).

4. A handle with at least one rotational device as recited in one of the preceding claims, wherein the guide slot (10) has a middle position (11) and/or one or two end positions (12, 13).

5. A handle with at least one rotational device as recited in one of the preceding claims, wherein the housing (1) has one or more projections (25) and/or one or move grooves (23) on its outer surface.

6. A handle with at least one rotational device as recited in one of the preceding claims, wherein the cap (5) has one or more projections (24, 30).

7. A handle with at least one rotational device as recited in one of the preceding claims, wherein the handle bar (19) has a profile (26) that corresponds to the projection or projections (25) and/or to the groove or grooves (23) of the housing (1) and/or to the projection or projections (24, 30) of the cap (5).

8. A handle with at least one rotational device as recited in one of the preceding claims, wherein the shaft (2) of the rotational device or devices is secured to a respective handle post (20).

## Revendications

1. Poignée pour un appareil ou un meuble, avec une tige de poignée (19) mobile et avec une ou deux unités rotatives qui présentent respectivement un boîtier (1) et un arbre (2), dans laquelle l'arbre (2) est supporté en rotation dans le boîtier (1), et dans laquelle la tige de poignée (19) est fixée sur le boîtier (1) ou les boîtiers (1) de l'unité rotative ou des unités rotatives,
**caractérisée par** un curseur (3), qui est supporté dans le boîtier (1) de façon à pouvoir coulisser dans la direction longitudinale de l'arbre (2) et de façon bloquée en rotation, qui est chargé par un ressort (4) et qui présente une coulisse de guidage (10) dans laquelle engrène une broche de guidage (8) de l'arbre (2).

2. Poignée avec au moins une unité rotative selon la revendication 1, **caractérisée en ce qu'**un ou plusieurs conduits (18) pour un fluide d'amortissement sont prévus dans le curseur (3) et/ou dans le boîtier (1).

3. Poignée avec au moins une unité rotative selon la revendication 1 ou 2, **caractérisée en ce que** l'arbre (2) est supporté en rotation dans un couvercle (5) raccordé au boîtier (1) et/ou dans le curseur (3).

4. Poignée avec au moins une unité rotative selon l'une des revendications précédentes, **caractérisée en ce que** la coulisse de guidage (10) présente une position centrale (11) et/ou une ou deux positions de fin de course (12, 13).

5. Poignée avec au moins une unité rotative selon l'une des revendications précédentes, **caractérisée en ce que** le boîtier (1) présente sur son côté extérieur une ou plusieurs saillies (25) et/ou une ou plusieurs rainures (23).

6. Poignée avec au moins une unité rotative selon l'une des revendications précédentes, **caractérisée en ce que** le couvercle (5) présente une ou plusieurs saillies (24, 30).

7. Poignée avec au moins une unité rotative selon l'une des revendications précédentes, **caractérisée en ce que** la tige de poignée (19) présente un profil (26) qui correspond à la ou aux saillies (25) et/ou à la ou aux rainures (23) du boîtier (1) et/ou à la ou aux saillies (24, 30) du couvercle (5).

8. Poignée avec au moins une unité rotative selon l'une des revendications précédentes, **caractérisée en ce que** l'arbre (2) de l'unité rotative ou des unités rotatives est fixé sur respectivement un bloc de poignée (20).
